(19) Europäisches Patentamt
European Patent Office
Office européen des brevets

(11) **EP 4 654 043 A1**

(12) **EUROPEAN PATENT APPLICATION**

(43) Date of publication:
    26.11.2025 Bulletin 2025/48

(21) Application number: 25178087.0

(22) Date of filing: 21.05.2025

(51) International Patent Classification (IPC):
    *G06F 16/535* (2019.01)    *G06F 16/583* (2019.01)

(52) Cooperative Patent Classification (CPC):
    G06F 16/535; G06F 16/583

(84) Designated Contracting States:
    AL AT BE BG CH CY CZ DE DK EE ES FI FR GB
    GR HR HU IE IS IT LI LT LU LV MC ME MK MT NL
    NO PL PT RO RS SE SI SK SM TR
    Designated Extension States:
    BA
    Designated Validation States:
    GE KH LA MA MD TN

(30) Priority: 23.05.2024 US 202463651015 P

(71) Applicant: Raven Industries, Inc.
    Sioux Falls, SD 57117-5107 (US)

(72) Inventors:
    • MANJUNATH, Sumukha
      Ontario, California, 91761 (US)
    • PREMKUMAR, Hamsalekha
      Tempe, Arizona, 85281 (US)
    • RAMAKRISHNAN, Rahul
      Chandler, Arizona, 85286 (US)

(74) Representative: Pfenning, Meinig & Partner mbB
    Patent- und Rechtsanwälte
    Joachimsthaler Straße 10-12
    10719 Berlin (DE)

(54) **ATTENTION-BASED FEATURE FOR OBJECT-ORIENTED GRANULAR NEIGHBOR SEARCH**

(57)    A method may include presenting a user interface, the user interface including a set of image similarity search options; receiving a selected image similarity search option of the set of the image similarity search options, the selected image similarity search option associated with a type of image representation; accessing an input query image file; generating an image representation of the input query image file according to the selected image similarity search option using a transformer model; querying an image representations database for image representations of a type that matches the type of image representation associated with the selected image similarity search option; filtering image representations resulting from the querying to a result set of image representations; and outputting a set of image files associated with the result set of image representations.

FIG. 7

EP 4 654 043 A1

**Description**

BACKGROUND

Image classification models help operational efficiency and accuracy in many industries. For example, these models enable the identification of objects within off-road agricultural environments, aiding in decision-making processes. For instance, image classification helps create routes for machinery in path planning. In object avoidance, image classification allows vehicles, whether autonomous or semi-autonomous, to detect and navigate around obstacles in real time. Additionally, image classification may aid in determining spray application rates. For example, an image classification model may identify areas of crops affected by pests or diseases and adjust the amount of spray of materials.

OVERVIEW

This overview is intended to provide an overview of subject matter of the present patent application. It is not intended to provide an exclusive or exhaustive explanation of the invention. The detailed description is included to provide further information about the present patent application.

Object classification accuracy is important in fully or semi-automated equipment operations (e.g., farming). The ability to correctly identify objects ensures that equipment functions as intended with as little error as possible. One manner of object identification is to use an object detection model as part of the operational controls of the equipment that takes image or video files as input and classifies the objects in the file. These models, while sophisticated, are not immune to errors and may include false positives and negatives-a telephone pole mistaken for a person or a child not recognized as a person-leading to potential operational failures or injury.

To rectify misclassifications, the object detection model may be retrained. Retraining may include gathering several examples of the object that was misclassified. One technique for gathering the images is to use an image similarity search (e.g., Euclidean distance, cosine similarity, structural similarity index). For example, a vector database is maintained for many features in image-based feature extraction. Then, to find images, the database is queried to find the features that most closely match the input image features. These approaches have several drawbacks when assembling a good training image set.

For example, consider a scenario in which an image file has a telephone pole, but the telephone pole's shadow is misidentified as a person. The telephone pole and its shadow may represent 10% of the overall image, and a large building may dominate the rest. If this image file is used for search, the results of an image search using prior methods will return many images of buildings-some with telephone poles and some without. However, for an object detection model to accurately learn what an object is, a diverse set of training images with the object in different contexts produces a much better result. Thus, retraining the model using existing methods with their non-varied results does not increase the accuracy as much as a diverse set of training images.

In view of the above problems, this disclosure describes a method for generating image representations that enhances the training process for object classification models. For example, a transformer-based model may be used to generate multiple types of image representations from a single image, each serving different purposes in the enhancement of the training dataset. First, class token representations may be generated that provide a holistic view of the image, encapsulating the overall context and content. This type of representation may be used to identify images that are broadly similar to a query image, thereby enriching the training set with examples that share general characteristics but differ in finer details.

Second, attention-based patch representations may be generated that focus on specific areas of an image deemed important by the transformer model. By applying thresholds to an attention map, the model selects patches of the image that contain features of interest. This targeted approach allows for encoding "relevant" image features.

Third, object-based representations may be generated from patches within annotated bounding boxes, providing precise data about specific objects within the images. These representations are valuable when the training requires focus on particular objects, enabling the model to learn from detailed and specific representations of target items.

The generated image representations may also be utilized to generate synthetic images to better train an object detection model. For example, the representations may be used as conditional prompts in generative AI models to generate realistic and contextually accurate images. This capability allows for creating a varied training dataset that includes scenarios and object combinations not present in the original data. For instance, synthetic images may be generated to show objects in unusual contexts or configurations, thereby training the object detection model to handle unexpected situations effectively.

To further leverage the generated image representations, the disclosure incorporates a user interface that facilitates the search for similar images or the generation of new images based on the different types of representations. For example, the user interface may provide options to select the type of image representation based on the user's specific needs. For instance, if a user is interested in finding images that are similar in overall composition, they can opt to search using the class token representations. Alternatively, if the focus is on specific features or objects within images, the user can choose to search using attention-based patch representations or object-based representations.

Overall, the ability to generate and utilize various image representations not only addresses the issue of insufficient training data but also enhances an object detection model's exposure to a diverse array of training examples. The result is a more robust and accurate object detection model, capable of performing well across a broader range of real-world applications.

BRIEF DESCRIPTION OF THE DRAWINGS

In the drawings, which are not necessarily drawn to scale, like numerals may describe similar components in different views. To easily identify the discussion of any particular element or act, the most significant digit or digits in a reference number refer to the figure number in which that element is first introduced. Like numerals having different letter suffixes may represent different instances of similar components. Some embodiments are illustrated by way of example, and not limitation, in the figures of the accompanying drawing.

FIG. 1 is an schematic diagram of example components of an application server, client device, and agricultural equipment, according to various examples.
FIG. 2 is an example image representation generation architecture for generating image representations, according to various examples.
FIG. 3 is an example segmentation of an image into patches, according to various examples.
FIG. 4 is a block diagram of attention-based image representation generation, according to various examples.
FIG. 5 is an example input image for generating image representations, according to various examples
FIG. 6 is a block diagram of object-specific image representation generation, according to various examples.
FIG. 7 is a user interface for an image similarity search, according to various examples.
FIG. 8 is a block diagram illustrating a method for searching an image representations database, according to various examples.
FIG. 9 is a block diagram illustrating a method to generate a synthetic image, according to various examples.
FIG. 10 is an image generation user interface, according to various examples.
FIG. 11 is a visual representation of generating a synthetic image, according to various examples.
FIG. 12 is a block diagram illustrating a machine in the example form of a computer system, within which a set or sequence of instructions may be executed to cause the machine to perform any one of the methodologies discussed herein, according to various examples.

DETAILED DESCRIPTION

In the following description, numerous specific details are outlined to provide a thorough understanding of some example embodiments. It will be evident, however, to one skilled in the art that the present invention may be practiced without these specific details.

Throughout this disclosure, components may perform electronic actions in response to different variable values (e.g., thresholds, user preferences, etc.). As a matter of convenience, this disclosure does not always detail where the variables are stored or how they are retrieved. In such instances, it may be assumed that the variables are stored on a storage device (e.g., Random Access Memory (RAM), cache, hard drive) accessible by the component via an Application Programming Interface (API) or other program communication method. Similarly, the variables may be assumed to have default values should a specific value not be described. Sometimes, user interfaces may be provided for an end-user or administrator to edit the variable values.

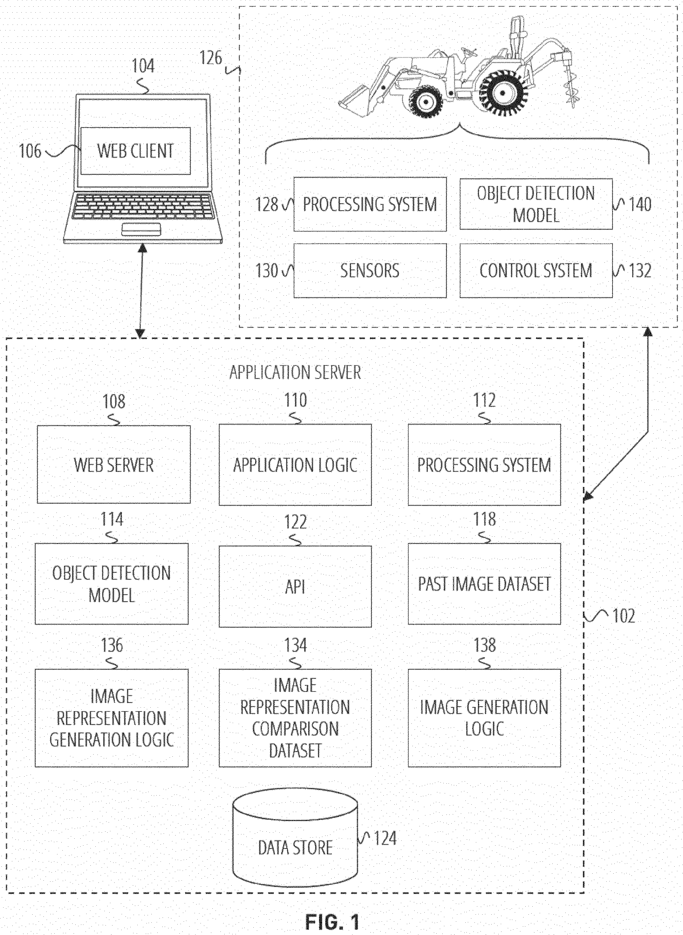

FIG. 1 is a schematic diagram of components of an application server, client device, and agricultural equipment, according to various examples. The diagram includes an application server 102, a client device 104, and agricultural equipment 126. The application server 102 includes elements of a web server 108, application logic 110, a processing system 112, an object detection model 114, API 122, past image dataset 118, image representation generation logic 136, image representation comparison dataset 134, image generation logic 138 and data store 124. Agricultural equipment 126 includes elements of an object detection model 140, processing system 128, sensors 130, and control system 132.

Application server 102 is illustrated as having separate elements. However, the functionality of multiple individual elements may be performed by a single element. An element may represent computer program code executable by processing system 112. The program code may be stored on a storage device (e.g., data store 124) and loaded into the memory of the processing system 112 for execution. Portions of the program code may be executed in parallel across multiple processing units. A processing unit may be one or more cores of a general-purpose computer processor, a graphical processing unit, an application-specific integrated circuit, or a tensor processing core operating a single device or multiple devices. Accordingly, code execution using a processing unit may be performed on a single device or distributed across multiple devices. In some examples, using shared computing infrastructure, the program code may be executed on a cloud platform (e.g., MICROSOFT AZURE® and AMAZON EC2®).

Client device 104 may be a computing device which may be but is not limited to, a smartphone, tablet, laptop, multi-processor system, microprocessor-based or programmable consumer electronics, game console, set-top box, or another device that a user utilizes to communicate over a network. In various examples, a computing device includes a display module (not shown) to display information (e.g., specially configured user interfaces). In some embodiments, computing devices may comprise one or more of a touch screen, camera, keyboard, microphone, or Global Positioning System (GPS) device. A user may use the client device 104 to interact with the application server 102. For example, the web client 106 may be used to access image training data, settings for machine learning model training logic 120, etc., via applications hosted by the web server 108.

The agricultural equipment 126 may operate with complete or semi-autonomy, guided by a control system 132 (operating on processing system 128) that uses sensors 130 to navigate its operational environment. The sensors 130 may include optical sensors that capture real-time image and video feed data. This data may be processed by the object detection model 140 to detect and classify various objects within the equipment's vicinity. The object detection model 140 may distinguish between static objects like trees and dynamic entities like farm animals. Periodically, the agricultural equipment 126 may receive object detection model 140 updates from the application server 102 based on object detection model 114.

The control system 132 may use the classifications of objects made by object detection model 140 to understand the spatial relationship between the agricultural equipment 126 and potential obstacles. Based on this understanding, the control system 132 may execute actions such as steering adjustments, speed changes, etc.

Client device 104, application server 102, and agricultural equipment 126 may communicate via a network (not shown). The network may include local-area networks (LAN), wide-area networks (WAN), wireless networks (e.g., 802.11 or cellular network), the Public Switched Telephone Network (PSTN), ad hoc networks, cellular, personal area networks or peer-to-peer (e.g., Bluetooth®, Wi-Fi Direct), or other combinations or permutations of network protocols and network types. The network may include a single Local Area Network (LAN), or Wide-Area Network (WAN) or combinations of LANs or WANs, such as the Internet.

In some examples, the communication may occur using an application programming interface (API) such as API 122. An API provides a method for computing processes to exchange data. A web-based API (e.g., API 122) may permit communications between two or more computing devices, such as a client and a server. The API may define a set of HTTP calls according to Representational State Transfer (RESTful) practices. A RESTful API may define various GET, PUT, POST, and DELETE methods to create, replace, update, and delete data stored in a database (e.g., data store 124).

Application server 102 may include web server 108 to enable data exchanges with client device 104 via web client 106. Although generally discussed in the context of delivering webpages via the Hypertext Transfer Protocol (HTTP), other network protocols may be utilized by web server 108 (e.g., File Transfer Protocol, Telnet, Secure Shell, etc.). A user may enter a uniform resource identifier (URI) into web client 106 (e.g., the INTERNET EXPLORER® web browser by Microsoft Corporation or SAFARI® web browser by Apple Inc.) that corresponds to the logical location (e.g., an Internet Protocol address) of web server 108. In response, web server 108 may transmit a web page that is rendered on a display device of a client device (e.g., a mobile phone, desktop computer, etc.).

Additionally, web server 108 may enable users to interact with one or more web applications provided in a transmitted web page. A web application may provide user interface (UI) components rendered on a display device of client device 104. The user may interact (e.g., select, move, enter text into) with the UI components, and, based on the interaction, the web application may update one or more portions of the web page. A web application may be executed in whole or in part, locally on client device 104. The web application may populate the UI components with data from external or internal sources (e.g., data store 124) in various examples.

The web application may be executed according to application logic 110. Application logic 110 may use the various elements of application server 102 to implement the web application. For example, application logic 110 may issue API calls to retrieve or store data from data store 124 and transmit it for display on client device 104. Similarly, data entered by a user into a UI component may be transmitted using API 122 back to the web server. Application logic 110 may use other elements (e.g., image representation generation logic 136, image representation comparison dataset 134, image generation logic 138, etc..) of application server 102 to perform functionality associated with the web application as described further herein.

For example, consider an operator of agricultural equipment 126 who notices an error made during a field operation, such as agricultural equipment 126 going off its intended track. In response, a user may use a device (e.g., computing client device 104) to transmit a message to application server 102 via a web application when the error is made. A user (or an automated system) may then access the diagnostic data (e.g., video/image feeds, logs from the control system 132, classification history made by object detection model 114, etc.) to determine what object(s) were misclassified that caused the error. In various examples, the diagnostic data is transmitted over API 122.

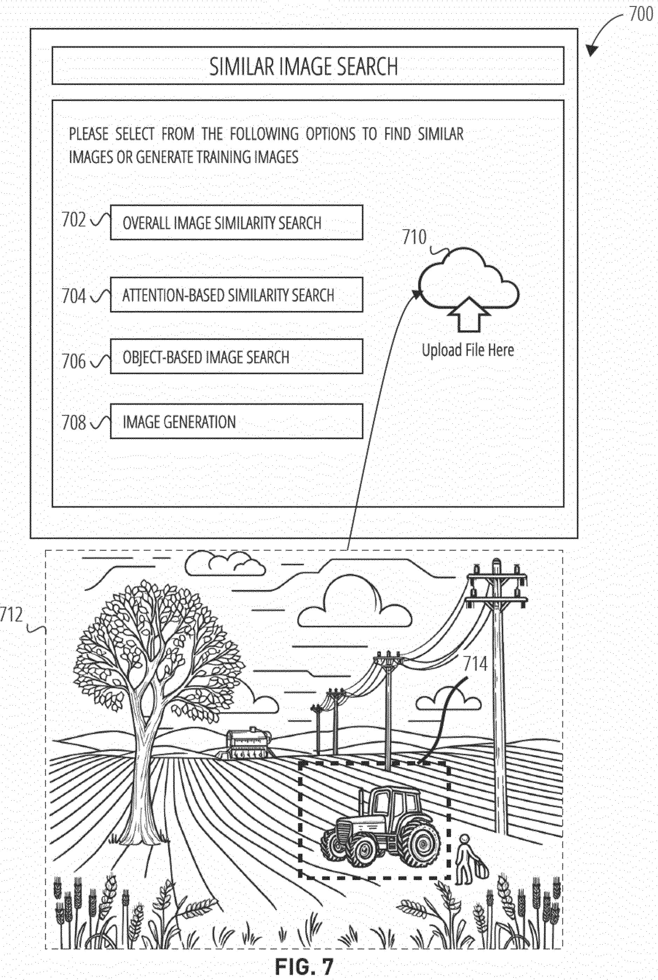

Additionally, a search web application (referred to as a search application) may provide a user interface to search for images similar to a query image to retrain an object detection model. The search application may perform a search using several methods. For example, a first search method may find images that match the query image overall. A second search method (referred to as an attention-based search) may find images based on an algorithmic determination of the most important/interesting parts of the query image. A user may also designate a portion of the image to search (e.g., using a bounding box selection). The search application may then perform an object-specific search for images similar to those in the designated portion(s). An example user interface for a search application is discussed in FIG. 7.

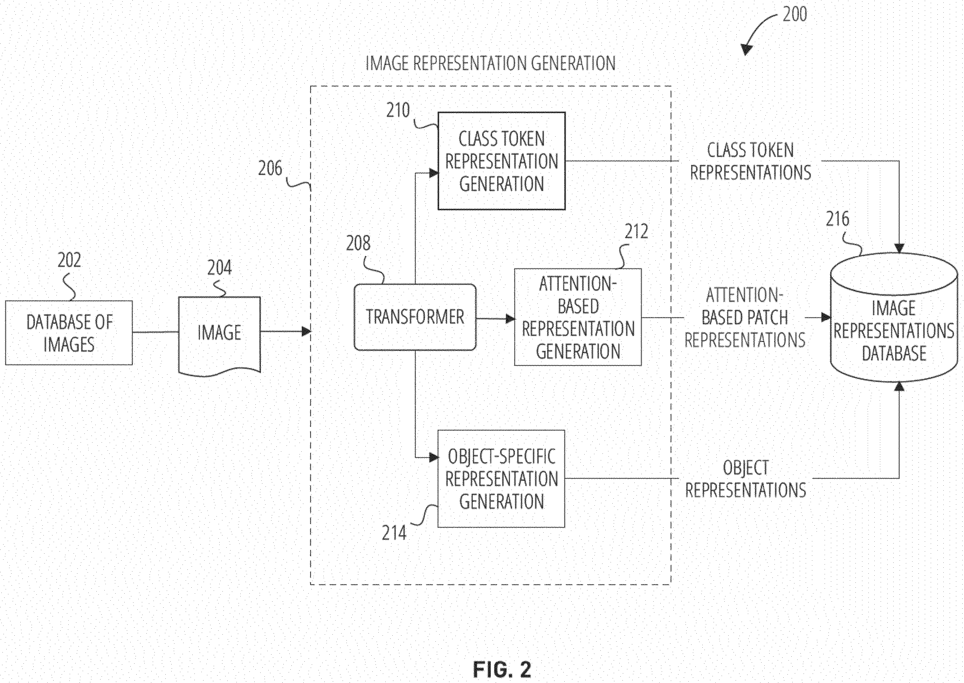

The search web application may first convert the image into a type of image representation (e.g., an embedding represented as a vector) using image representation generation logic 136 and search image representation comparison dataset 134. The image representation comparison dataset 134 may be populated by generating one or more types of image representations from past image dataset 118. The type of image representation may be based on the search type. For example, the type may be a class token representation if the search is an overall search. The type may be an attention-based representation if the search is an attention-based search. If the search is object-specific, the type may be an object-specific representation. Examples of generating different types of image representations are described further in FIG. 2, FIG. 5, FIG. 4, and FIG. 6.

In various examples, image generation logic 138 may be used to generate completely synthetic images or modify existing images. The image generation logic 138 may include one or more image generating machine learning models such as Generative Adversarial Networks (GANs), Variational Autoencoders (VAEs), Auto-regressive Models, transformer-based models, and diffusion models. The models may be pre-trained or trained/fine-tuned using past image dataset 118 or other image datasets.

Furthermore, the image generation logic 138 may use image representations from image representation generation logic 136 as conditional inputs (e.g., embeddings) with a base image. For example, in diffusion models, images are generated by gradually denoising a random noise distribution. An embedding may guide the denoising to include the characteristics or attributes of the embedding. Similarly, in a VAE-based mode, the embedding may influence the latent variables during the decoding process to generate an image with the attributes specified by the embedding.

Data store 124 may store data that is used by application server 102. Data store 124 is depicted as a singular element but may be multiple data stores. The specific storage layout and model used by data store 124 may take several forms-indeed, a data store 124 may utilize multiple models. Data store 124 may be but is not limited to, a relational database (e.g., SQL), a non-relational database (NoSQL), a flat file database, an object model, a document details model, a graph database, shared ledger (e.g., blockchain), or a file system hierarchy. Data store 124 may store data on one or more storage devices (e.g., a hard disk, random access memory (RAM), etc.). The storage devices may be in standalone arrays, part of one or more servers, and located in one or more geographic areas.

Data structures may be implemented in several ways depending on the programming language of an application or the database management system used by an application. For example, if C++ is used, the data structure may be implemented as a struct or class. In the context of a relational database, a data structure may be defined in a schema.

FIG. 2 is an example image representation architecture 200 for generating image representations, according to various examples. The image representation architecture 200 includes a database of images 202, an image 204, an image representation generation 206, a transformer 208, a class token representation generation 210, an attention-based representation generation 212, an object-specific representation generation 214, and an image representations database 216.

The image representation architecture 200 may be used by image representation generation logic 136 to generate image representation comparison dataset 134 (e.g., database of images 202 may be past image dataset 118), in various examples. The image representation architecture 200 may also be used to generate image representations to find similar image representations in image representation comparison dataset 134.

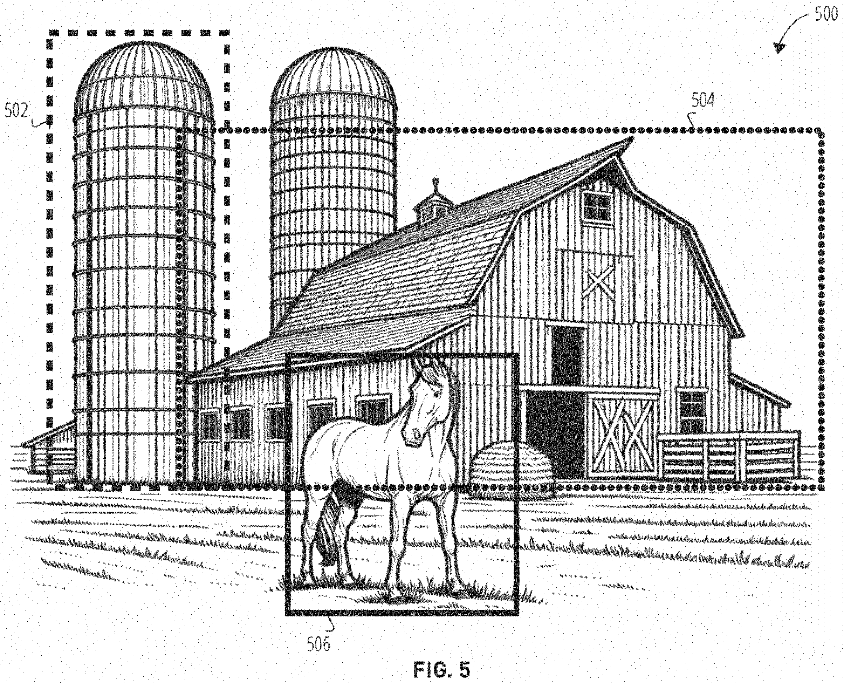

The database of images 202 may include thousands or millions of images that include a diverse set of scenarios and objects that an object detection model may classify. A subset of the images may be labeled. A label may be a classification (e.g., person) of an object in an image and the object's location. The location may include a set of pixel coordinates (x, y) within the image encompassing the object. For example, the pixel coordinates may represent a bounding box around the object. Each image may include multiple labels of different objects and their respective pixel coordinates. An example of a labeled image is discussed in FIG. 5.

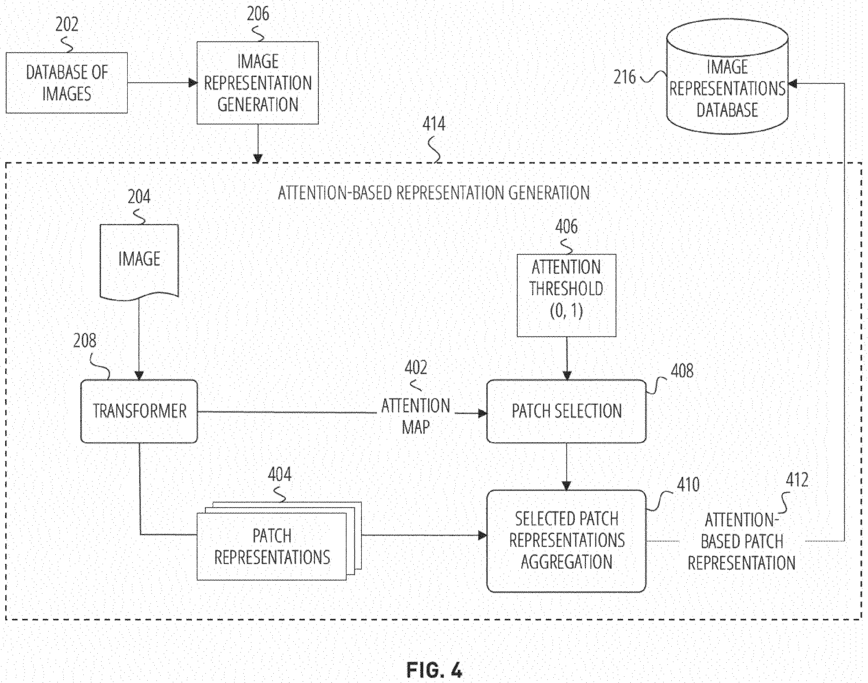

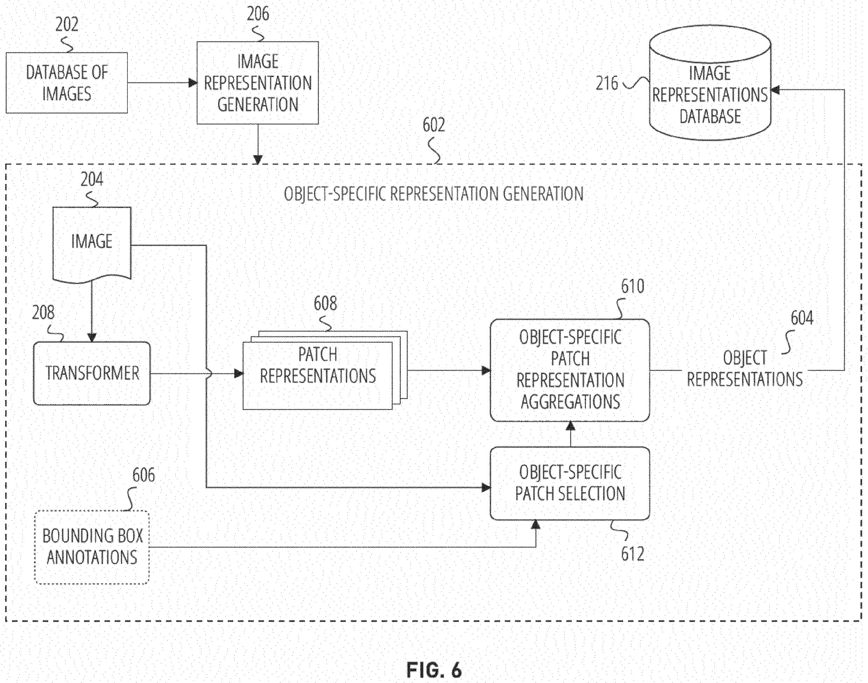

The image representation architecture 200 may process each image in image representation generation 206 to generate one or more types of image representations. Processing image 204 is discussed as an example. In various examples, image representation architecture 200 uses a Vision Transformer (ViT) model (e.g., transformer 208) to generate the image representations. Attention-based representation generation 212 and object-specific representation generation 214 are discussed in FIG. 4 and FIG. 6, respectively.

The dimensions of each patch may be set as a parameter of the transformer 208. The total number of patches may then be $\frac{hw}{p^2} = s$ where h is the height of an image, w is the width, p is the width and height of a patch, and s is the total number of patches. Each patch may then be flattened into a one-dimensional vector. The length of the vector may be based on the patch size and color space. For example, if a patch is 16x16 pixels and the image has three color channels (RGB), the flattened vector will have 768 elements ($16 \times 16 \times 3 = 768$). In addition to the patches from the image, an additional vector of an equal length may be initialized (either randomly or with zeros) and used to represent the image overall (referred to as a class token). Thus, after segmentation, a sequence of vectors may be equal to the number of patches plus one (for the class token).

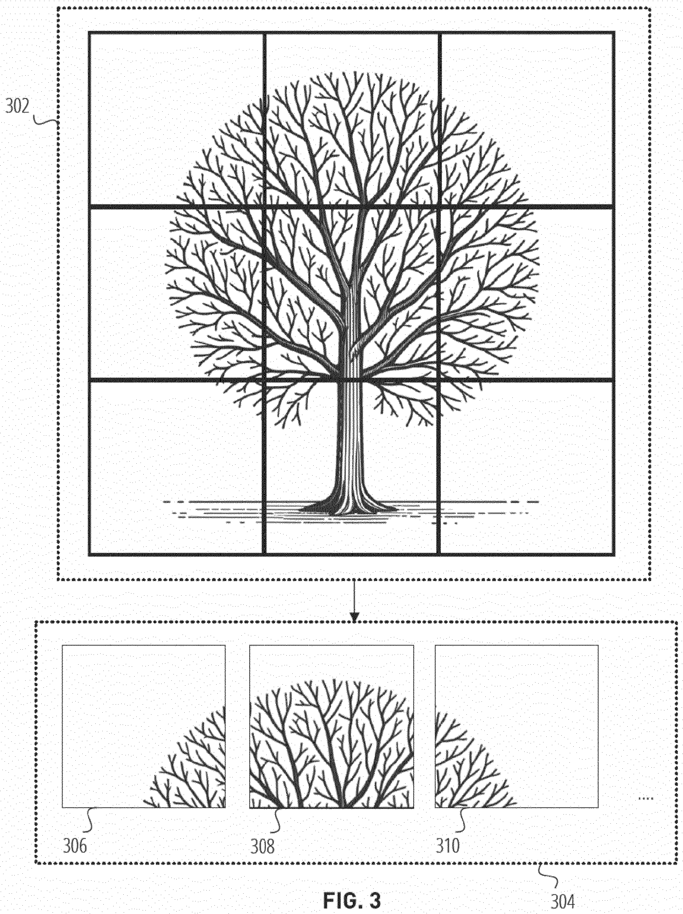

FIG. 3 is an example segmentation of an image into patches, according to various examples. As illustrated, the segmented image 302 is of a tree divided into nine parts. The patches 304 provide a conceptual representation of three patches in the segmented image 302. Using the methodology previously described, each patch in patches 304 may be flattened into a one-dimensional vector. For example, consider patch 306 is 12 pixels across, 12 pixels down, and has three color channels. The flattened vector may include a sequence of 144 three-element tuples of red, blue, and green color values (e.g., 0-255), each tuple representing a pixel in the patch.

Using matrix multiplication in a transformer model, each patch may be linearly projected into a higher dimension space creating a set of patch representations (also referred to as patch embeddings). Thus, if $V$ is the flattened vector and $W$ is the projection matrix, the patch embedding $E$ may be calculated by $E = V \times W$. The length of the projected vector (the number of rows in $W$) is a hyperparameter and may be chosen based on the desired model complexity. For example, each 768-element vector could be projected into a 1024-dimensional space regardless of the original patch size. If a transformer model is being trained, the values in $W$ may change as the patch embeddings pass through the transformer layers. However, if the transformer model is being used for inference, the $W$ values remain static for each patch.

To keep track of the position of a patch, each patch representation may include encoded positional information that correlates to the underlying respective patch's position within the image using a left-to-right and top-to-bottom ordering (although other ordering may be used). For example, the patch representation for patch 306 may be position '1,' patch 308 may be position '2,' and patch 310 may be position '3,' etc. A class token may be given a position of '0.' Accordingly, after the segmentation, flattening, projection, and encoding of positional information, there may be a set of patch representations equal to the number of patches plus one (for the class token).

Regarding FIG. 2, consider that image 204 is input to the transformer 208 to generate a set of patch representations. A transformer may include several operations using feed-forward neural networks, among others. For example, transformer 208 may include an attention mechanism.

An attention mechanism operates under the principle of self-attention, which calculates the dependency of an object (or signal) on others within the image. This determines which parts of an image are most "interesting." A multi-head attention mechanism includes multiple attention heads, each capable of focusing on different aspects of an image (e.g., outlines, color gradient, texture).

In various examples, each patch representation in the set of patch representations may be transformed into three different vectors-Query (Q) vector, Key (K) vector, and Value (V) vector- using linear transformation using three respective matrices. For each patch representation in the set of patch representations, an attention score may be calculated with every other patch representation, including itself. An attention score may be calculated by taking the dot product of the Query vector of one patch with the Key vector of every other patch.

The attention mechanism results in a set of attention scores that measure how much each patch should attend to every other patch. In various examples, the attention scores for a patch representation are normalized (e.g., using a SoftMax function) such that all the attention scores for a patch representation equal one. The higher the attention score, the more "important" a patch representation may be to the other patch representations. For example, for FIG. 3, the center patch of segmented image 302 may have a higher attention score than the lower left patch.

Accordingly, after transformer 208 has processed image 204, each patch representation of the set of patch representations may be associated with one or more attention scores-e.g., more than one if a multi-head attention mechanism is used. The attention-based representation generation 212 process is described more with respect to FIG. 4.

After the attention scores have been calculated, the patch representations' values (e.g., the vector values) may be updated. An update for a patch representation may include taking a weighted sum of all Value vectors where the weighted sums are based on the previously generated attention scores. For example, the updating may be mathematically represented by:

$$Updated\ Embedding\ of\ Patch\ Representaiton_i = \sum_{j} \left( Attention\ Score_{ij} \times Value\ Vector_j \right)$$

where $i$ and $j$ both represent an index into the set of patch representations.

Class token representation generation 210 may include accessing the class token of the updated set of patch representations and storing it within the mage representations database 216. For example, an image identifier of image 204 may be stored with the class token representation of image 204. Because the class token representation has been updated with information from each patch of image 204, the class token representation is a summarization of all parts of the image. Therefore, the class token representation is a mathematically holistic representation of image 204.

FIG. 4 is a block diagram of attention-based image representation generation, according to various examples. For continuity, the database of images 202, image 204, image representation generation 206, transformer 208, and image representations database 216 are displayed as in FIG. 2. Attention-based representation generation 414 may be an implementation of attention-based representation generation 212. However, attention-based representation generation 414 may be used separately from the image representation architecture 200.

Using the process described above for FIG. 2, image 204 (or another image) may be segmented into patches by a transformer. The transformer, such as transformer 208 may flatten and linearly project the patches into a higher dimension space, creating an initial set of patch representations. The patch representations may pass through the transformer 208 where attention scores are calculated for each patch representation, and the set of patch representations are updated based on those attention scores. In FIG. 4, patch representations 404 represent the set of patch representations after the updating. The attention map 402 may be the normalized attention scores (e.g., a value range of zero to one) for each patch of patch representations 404. For example, using the tree image in FIG. 3, the attention map 402 may include nine attention scores-one for each patch.

The patch selection 408 may use attention map 402 and attention threshold 406 to filter out patch representations from the patch representations 404 that have an attention score below the attention threshold 406. The attention threshold 406 may be a configurable value. For example, a higher attention threshold value may allow fewer patch representations to pass through to selected patch representations aggregation 410 than a lower attention threshold value. Using the tree example again, patch selection 408 may result in all patch representations passing through except the patch representations associated with the lower left and lower right patches of segmented image 302.

At selected patch representations aggregation 410, the subset of patch representations remaining after filtering may be summed and averaged to generate attention-based patch representation 412. The averaging may be weighted based on the attention scores of an individual patch representation. For example, consider there are patch representations with attention scores of 0.7, 0.5, and 0.8. In such an instance, the values in the patch representation with the attention score of 0.5 may be given a weight of 20% (e.g., (0.5) / (0.7+0.5+0.8)).

The attention-based patch representation 412 resulting from selected patch representations aggregation 410 may be stored in the image representations database 216 as associated with an image identifier of image 204. In various examples, multiple attention-based patch representations may be stored for an image. For example, four different thresholds may be set (e.g., 0.2, 0.5, 0.7, 0.9) such that the patch selection 408 and selected patch representations aggregation 410 are repeated four times. The multiple attention-based patch representations may be stored as a vector with four columns, where each column represents the aggregated patch representations for a different threshold.

FIG. 5 is an example input image 500 for generating image representations, according to various examples. Image 500 may be an image in past image dataset 118. Some images, such as image 500, may have additional annotations stored as metadata that identify bounding box areas of an image with labels indicating the type of object within the bounding box. The metadata is stored in a separate database from the image in various examples. Image 500 includes three bounding box areas: bounding box 502, bounding box 504, and bounding box 506.

The metadata may include the label and (X, Y) coordinates that define the area of an image associated with the label. Although bounding boxes are described, the metadata may include more sets of coordinates to reflect the object's location more closely (e.g., define a path around the object represented by the object). For example, the metadata of bounding box 502 may include a label "silo," bounding box 504, a label of "barn," and bounding box 506, a label of "horse." An image may have multiple instances of the same type of object. For example, image 500 may include a second bounding box for the second silo.

FIG. 6 is a block diagram of object-specific image representation generation, according to various examples. For continuity, database of images 202, image 204, image representation generation 206, transformer 208, and image representations database 216 are displayed as in FIG. 2. Object-specific representation generation 602 may implement object-specific representation generation 214. However, object-specific representation generation 602 may be used separately from the image representation architecture 200. In various examples, before object-specific representation generation 602 is executed, image 204 may be checked to determine if annotations exist for the image. If no annotations exist, the object-specific representation generation 602 may be skipped for image 204.

Using the process described above for FIG. 2, image 204 (or another image), a transformer, such as transformer 208 may flatten and linearly project patches of the image into a higher dimension space, creating an initial set of patch representations. The set of patch representations may be input and processed by transformer 208 where the set of patch representations is updated based on attention scores, as previously discussed. In FIG. 6, patch representations 608 represent the set of patch representations after the updating. Object-specific patch representation aggregations 610 and object-specific patch selection 612 may be repeated for each identified bounding box in bounding box annotations 606.

Using FIG. 5 as image 204, consider that the silo represented by bounding box 502 is processed first by object-specific patch selection 612 and object-specific patch representation aggregations 610. As indicated previously, patch representations 608 may have encoded positional information that maps to the original location of a patch within an image.

Thus, because the bounding box annotations 606 include coordinate information, the patch representations of patch representations 608 that correspond to the patches of the bounding box may be identified.

For example, consider that image 500 was divided into patches, and the encoding used a left-to-right and top-to-bottom sequence. Consequently, using pixel coordinates, the first patch would begin at '0' in the horizontal direction and end at 0 + the width of a patch. Similarly, the first patch would end in the vertical direction at 0 + the height of a patch. If the bounding box of an object (e.g., bounding box 502) has a coordinate that falls within (0,0) to (0 + the width of a patch, 0 + the height of a patch), it would be included in the object-specific patch selection 612.

At object-specific patch representation aggregations 610, the subset of patch representations identified by object-specific patch selection 612 may be aggregated. The aggregation may be performed similarly as selected patch representations aggregation 410 (e.g., summed and averaged).

The object representations 604 in image representations database 216 for an image may formatted as a multicolumn vector. Each column in a vector may represent a possible class of object. For example, there may be columns for people, combines, trees, silos, barns, etc. If an image has an annotation for one of the objects in the class, the resulting object representation from object-specific patch representation aggregations 610 may added to the corresponding column. Thus, using image 500, there may be one vector under the column associated with the label "barn," one vector for "horse," and one for "silo." If a second bounding annotation was included around the second silo in image 500, a second vector would be added to the "silo" column.

Multiple types of image representations may be stored for an image in a column format. For example, a first column may represent the class token representation, the next set of columns may store one or more attention-based representations, and then a set of columns may be used for each possible class of object. Thus, a single data file may include all the image representations for an image.

FIG. 7 is a user interface for an image similarity search, according to various examples. User interface 700 may be served from a web server (e.g., web server 108 of FIG. 1) and presented on a computing device (e.g., client device 104 in FIG. 1). The user interface 700 may be used to retrieve or generate images for updating an object detection model (e.g., object detection model 114).

User interface 700 includes a set of image similarity search options: search option 702, search option 704, search option 706, and image generation option 708. A user may upload an image for searching using upload file element 710. For example, a user may navigate to an image file such as input image 712 and upload it using upload file element 710. In various examples, the input image 712 may include one or more bounding boxes such as bounding box 714.

The different search options are associated with searching types of image representations in a database. The database may be populated with image representations using the methodologies described in FIG. 2. Accordingly, user interface 700 is discussed in the context of searching the image representations database 216. However, the search may be performed using other databases as well. A server, such as web server 108, may receive a selection of one of the image similarity search options and execute a search for the type of image representation associated with the selection.

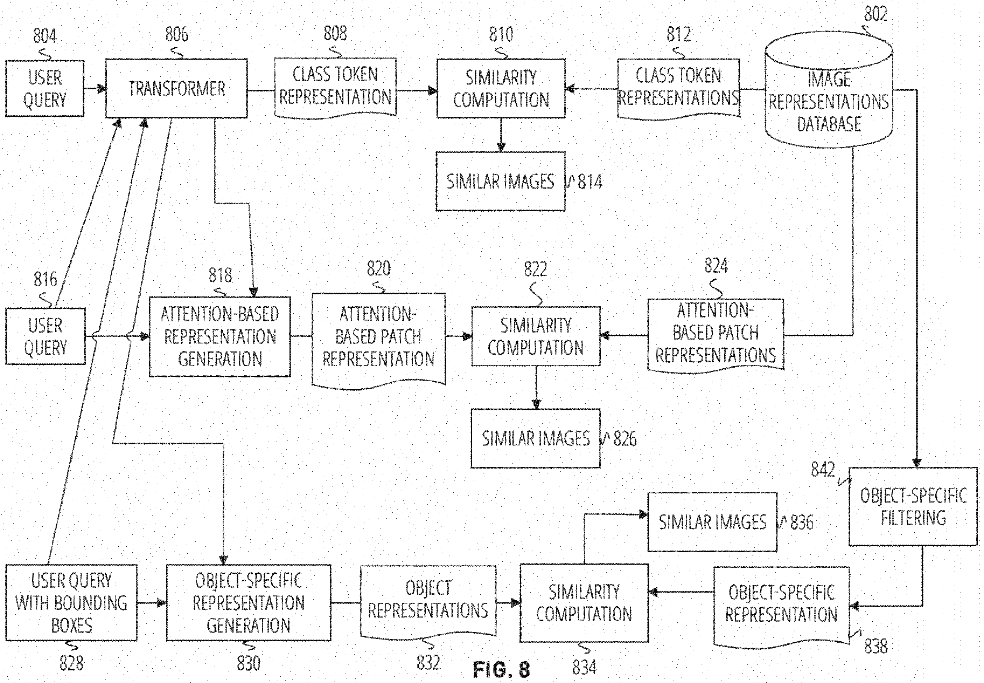

For example, search option 702 may be a class-based image similarity option. Accordingly, the search may search class token representations from the image representations database 216. Search option 704 may be associated with an attention-based image similarity option. Accordingly, the search may search attention-based patch representations from the image representations database 216. The search option 706 may be an object-specific image similarity option and, therefore search the object representations from the image representations database 216. Example implementations of each of these search options are discussed in FIG. 8.

FIG. 8 is a block diagram illustrating a method for searching an image representations database, according to various examples. As part of the searching, the flowchart includes methods for generating an image representation of an input query image file according to a selected image similarity search option using a transformer model (e.g., one of the set of image similarity search options presented in FIG. 7). Additionally, the flowchart illustrates querying the image representations database 802 for image representations of a type that matches the type of image representation associated with the selected image similarity search option. The resulting image representations of the querying may be filtered to a result set of image representations based on similarity computations. A set of image files associated with the result set of image representations may be output. The image files may be used as input (e.g., after feature vector creation) to update an object detection model (e.g., object detection model 114).

For example, for user query 804, the image representations database 802 may be searched for class token representations. For user query 816, the image representations database 802 may be searched for attention-based patch representations. For user query with bounding boxes 828, the image representations database 802 may be searched for object representations. The user query 804, user query 816, and user query with bounding boxes 828 may represent searching using search option 702, search option 704, and search option 706 in FIG. 7, respectively. The user queries may include an input query image file, such as input image 712, which may be accessed from a database.

Regarding user query 804, the method may include inputting the user query 804 into transformer 806 to generate class token representation 808. The class token representation 808 may be generated as discussed for class token representation generation 210 in FIG. 2. The image representations database 802 may be filtered to exclude image representation types that are not class tokens. In various examples, excluding may include using a query to image representations database 802 that identifies the type of image representation (e.g., class token representation in this instance). In other examples, excluding may include receiving all the image representations and then narrowing the set to those of a type of the query. The resulting class token representations 812 may be compared with class token representation 808 at similarity computation 810. The comparison may include performing a nearest neighbor type search, such as a cosine similarity calculation.

Although not illustrated, the similarity computation 810 may receive a threshold cosine similarity value (e.g., 0.9) from the user or as a default value. Through the cosine calculations, each class token representation of class token representations 812 with a cosine similarity value above the threshold may be identified. Those class token representations below the threshold cosine similarity value may be filtered out. Then, the image files corresponding to the identified class tokens (e.g., using an image identifier) may be retrieved (e.g., from past image dataset 118) and output as similar images 814. Outputting may include presenting the image files on a device or providing a link to download the image files.

For the user query 816, the method may include generating attention-based patch representation 820 using attention-based representation generation 818. Attention-based representation generation 818 may be implemented using a transformer (e.g., transformer 806) as described for attention-based representation generation 414 in FIG. 4. For example, the input query image file of user query 816 may have patch representations generated using transformer 806.

The output of the transformer may be a set of patch representations that include attention values for each of the patch representations. Within the attention-based representation generation 818, an attention threshold value may be used that is the same as that used to generate the attention-based patch representations in image representations database 802. As described in FIG. 4, patch representations having an attention value below the attention threshold may be filtered out from the output set of patch representations. The remaining patch representations after the filtering may aggregated to generate the attention-based patch representation 820.

Furthermore, image representations database 802 may be filtered to exclude types of image representations that are not attention-based patch representation types. Accordingly, attention-based patch representations 824 from image representations database 802 may be used with attention-based patch representation 820 to perform similarity computation 822. As with similarity computation 810, similarity computation 822 may use a cosine similarity calculation to identify which attention-based patch representations of attention-based patch representations 824 exceed a similarity threshold. Then, the image files corresponding to the identified attention-based patch representations (e.g., using an image identifier) may be retrieved (e.g., from past image dataset 118) and output as similar images 826. Outputting may include presenting the image files on a device or providing a link to download the image files.

Regarding user query with bounding boxes 828, object-specific representation generation 830 may generate object representations 832 in a similar manner described for object-specific representation generation 602. Accordingly, the input query image file of the user query with bounding boxes 828 may have initial patch representations generated using a transformer such as transformer 806. In response, the transformer 806 may output a set of patch representations (e.g., updated versions of the initial patch representations). A subset of output patch representations may be aggregated based on the identification of the subset of the input query image file using encoded positional information as described for object-specific representation generation 602. The resulting aggregated subset of output patch representations may be added to a vector.

The vector may be generated with a number of columns, each representing a potential class of object. If a bounding box in a user query with bounding boxes 828 includes a class of object, an object-specific representation may be generated and placed in the corresponding column. For example, if input image 712 was the user query with bounding boxes 828, the column corresponding to a "tractor" class object may be populated with the output of object-specific representation generation 830.

The bounding boxes in the user query with bounding boxes 828 may identify a subset of an image query file (e.g., based on coordinates). The bounding boxes may be retrieved from parsing metadata of an image query file. The user query with bounding boxes 828 may include multiple bounding boxes. A bounding box may be associated with a label (e.g., user entered or from metadata) in various examples. In other examples, a class of an object in a bounding box may be determined by using an object classification model (e.g., object detection model 114) on the area of the image in the bounding box. Furthermore, if the object is unknown (e.g., cannot readily be classified), all object-specific representations may be searched instead of filtered as described below.

The image representations database 802 may be filtered in two manners. First, the image representations database 802 may be filtered to exclude class token representations and attention-based representations. Then, object-specific filtering 842 may be used to exclude object-specific representations that do not have at least the number of instances of a class of objects identified by the vector of object representations 832. For example, consider a user query with bounding boxes 828, which has two vectors in the "people" column and ten vectors in the "tree" column. Thus, object-specific filtering 842 may exclude any object-specific representation from image representations database 802 that does not have at least two vectors in the "people" column and ten vectors in the "tree" column.

The object representations remaining after the object-specific filtering 842 may be passed to similarity computation 834 for comparison with object representations 832. The similarity computation 834 may be performed in a similar manner as similar images 826 and similar images 814 but with additional operations. For example, a cosine similarity calculation may be performed for each class of objects present in the object representations 832. Using the example above, a cosine similarity calculation may be performed for the trees and people object classes. If there are multiple instances of a class, the comparison may be performed for each instance. For example, if there are two people, the first object-specific representation (e.g., the first person) may be compared to each person class representations in object-specific representation 838. Then the second object-specific representation may be compared to each person class representations in object-specific representation 838.

An intersection of the results of the multiple calculations using a similarity threshold may be used as the similar images 836. For example, consider ten images in object-specific representation 838 were passed to similarity computation 834 with image identifiers of 1, 2, 3, etc. The "tree" similarity comparison may result in images 3, 4, 5, and 6 after applying the similarity threshold. The "people" similarity comparison may result in images 2, 3, 4, 7. Accordingly, the intersection would be images 3 and 4.

Then, the image files corresponding to the identified object representations (e.g., using image identifiers) may be retrieved (e.g., from past image dataset 118) and output as similar images 836. Outputting may include presenting the image files on a device or providing a link to download the image files.

Similar images 836 may be outputted to a client device by presenting the image files on the device or providing a link to download the image files.

In various examples, a user may not be required to have an image with the combination of objects to search. For example, a user may want to find images that three trees, two people, and a telephone pole but does not have an example that includes that combination. However, the user may have a first image with three trees and two people in bounding boxes and a second image with a telephone in a bounding box. The user may upload both images using upload file element 710 and each of the images may be processed to generate the object-specific representations across both images. Accordingly, the object-specific filtering 842 would be based on finding images that have at least three trees, two people, and one telephone phone.

In various examples, a user may specify a count of objects directly. Thus, consider that the user does not have an image with three trees and two people but has a first image with a single tree and a second image with one person. The user may submit the images as user query with bounding boxes 828. However, after object-specific representation generation 830, a prompt may be presented to the user asking how many of each of class of generated object-specific representations should be used as the basis for the object-specific filtering 842.

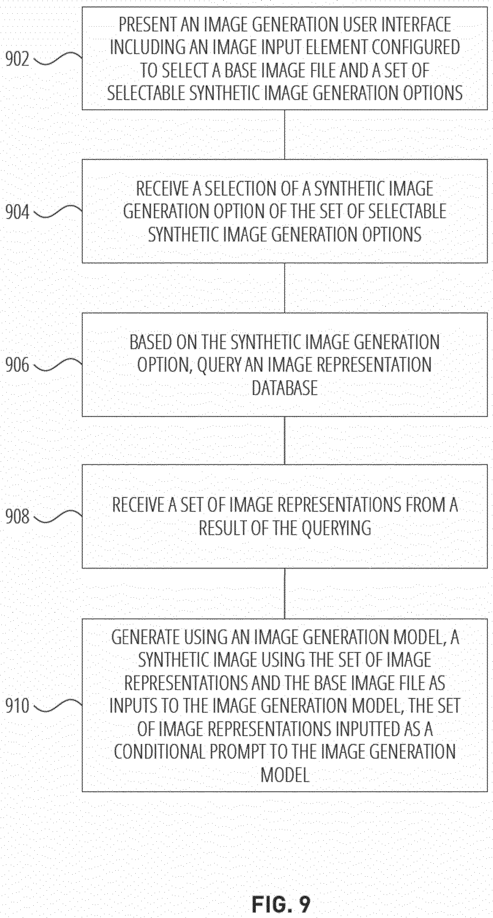

FIG. 9 is a block diagram illustrating a method to generate a synthetic image, according to various examples. The method is represented as a set of blocks that describe operations 902 to 910. The method may be embodied in a set of instructions stored in at least one computer-readable storage device of a computing device. A computer-readable storage device excludes transitory signals. In contrast, a signal-bearing medium may include such transitory signals. A machine-readable medium may be a computer-readable storage device or a signal-bearing medium. A processing unit, which, when executing the set of instructions, may configure the processing unit to perform the operations illustrated in FIG. 9. The processing unit may instruct other components of a computing device to carry out the set of instructions. For example, the processing unit may instruct a network device to transmit data to another computing device, or the computing device may provide data over a display interface to present a user interface. In some examples, the method's performance may be split across multiple computing devices using a shared computing infrastructure (e.g., the processing unit encompasses multiple distributed computing devices).

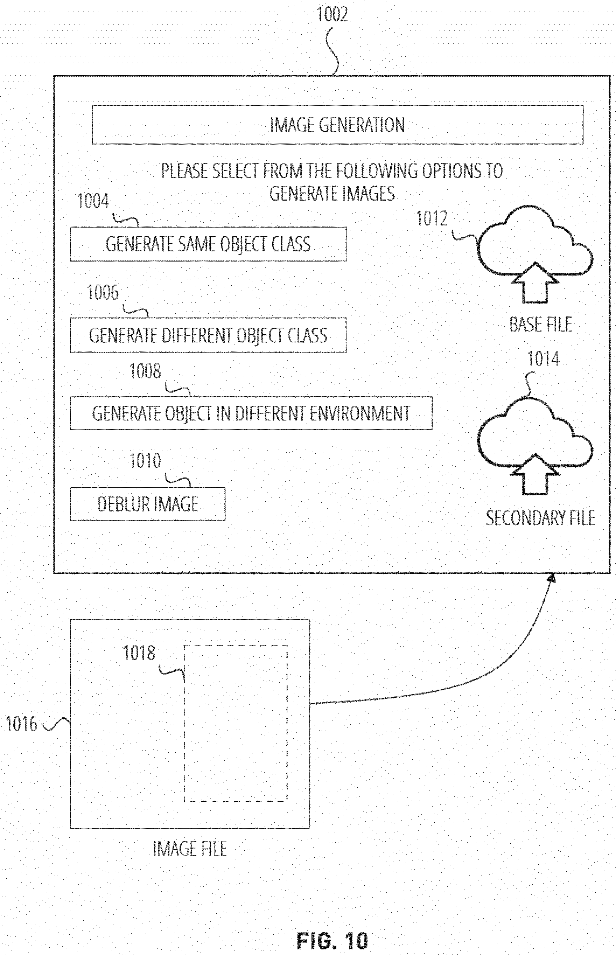

At operation 902, the method may include presenting an image generation user interface including an image input element configured to select a base image file and a set of selectable synthetic image generation options. An example of an image generation user interface is presented in FIG. 10. Accordingly, references may be made to elements of FIG. 10 when discussing the operations of FIG. 9.

As presented in FIG. 10, a user interface 1002 may include selectable synthetic image generation options such as option 1004, option 1006, option 1008, and option 1010. The user interface 1002 includes base file selection element 1012 and secondary file selection element 1014. The number of options and file selection elements are examples, and fewer or more options and file selection elements may be used. Each of the options may be associated with a different method of generating synthetic images using an image generation model (e.g., as implemented by image generation logic 138 in FIG. 1). A synthetic image may be an image that is generated by a machine learning model as opposed to captured using a sensor or converted from sensor data of a camera.

In various examples, the image generation model has been trained for in-painting (e.g., filling in or changing portions of an image). For example, training the image generation model may include artificially creating gaps or masks in images of past image dataset 118. These masks can be random or structured. For instance, masks might be placed over high-attention objects (e.g., based on attention scores) or scattered randomly across the image. Then, a pair of inputs may be generated for each image: the masked image (as the input) and the original image (as the target output). During training, the image generation model is exposed to the masked images and learns to predict the original unmasked image. The model adjusts its weights based on a loss function, which penalizes it for discrepancies between its predictions and the actual unmasked images. Over successive iterations, the image generation model optimizes its parameters to minimize these discrepancies.

At operation 904, the method may include receiving a selection of a synthetic image generation option of the set of selectable synthetic image generation options. For example, in FIG. 10, option 1004 is the same class of object generation option. A user may use option 1004 when the user has an image with a class of object (e.g., a person) and wants to generate images that have the same general composition as the base image file but with variations of the object. Thus, in various examples, the method may further include receiving an identification of a subset of the base image file. The identification may be a bounding box, as discussed concerning bounding box 714 in FIG. 7. For example, a user may upload image file 1016 with bounding box 1018 using base file selection element 1012. The bounding box 1018 may represent the area of the image that includes the object that the user wants to replace or modify.

At operation 906, the method may include querying an image representation database based on the synthetic image generation option. At operation 908, the method may include receiving a set of image representations as a result of the querying. For example, when option 1004 is selected, the querying may include filtering an image representation database (e.g., image representations database 216) for object-specific representations. The querying may be further based on a specific object class. For example, if the bounding box 1018 is of a person, the object-specific representations may be for people objects.

In various examples, an object-specific representation may be generated as described in object-specific representation generation 830 for the bounding box area of the base image file. Accordingly, the resulting set of image representations of operation 908 may then include a set of object-specific representations that are closest (according to cosine distance) to the generated object-specific representation.

At operation 910, the method may include generating, using an image generation model, a synthetic image using the set of image representations and the base image file as inputs to the image generation model. The set of image representations may be inputted as conditional prompts (e.g., as described for image generation logic 138 of FIG. 1) to the image generation model. For example, for option 1004, the generating may include generating image data in the subset of the base image file based on the object-specific representation. Accordingly, a new synthetic image may be generated for each object-specific representation resulting from operation 908. For example, if the class of object was a person, each new synthetic image will have a person in the area of the image represented by bounding box 1018. In this manner, training data may be quickly generated with a diverse set of people but with the same overall image background. Other use cases may include altering specific features, such as adjusting the color of a feature, or style of clothing, or modifying the pose of the object.

With reference back to FIG. 10, consider that a user has selected option 1006. Option 1006 may be used when a user wants to generate a different class of object in a portion of an image than what is presented in the base image file. In such an instance, a subset of the base image file may include a mask in which a new type of object with a different class may be in-painted.

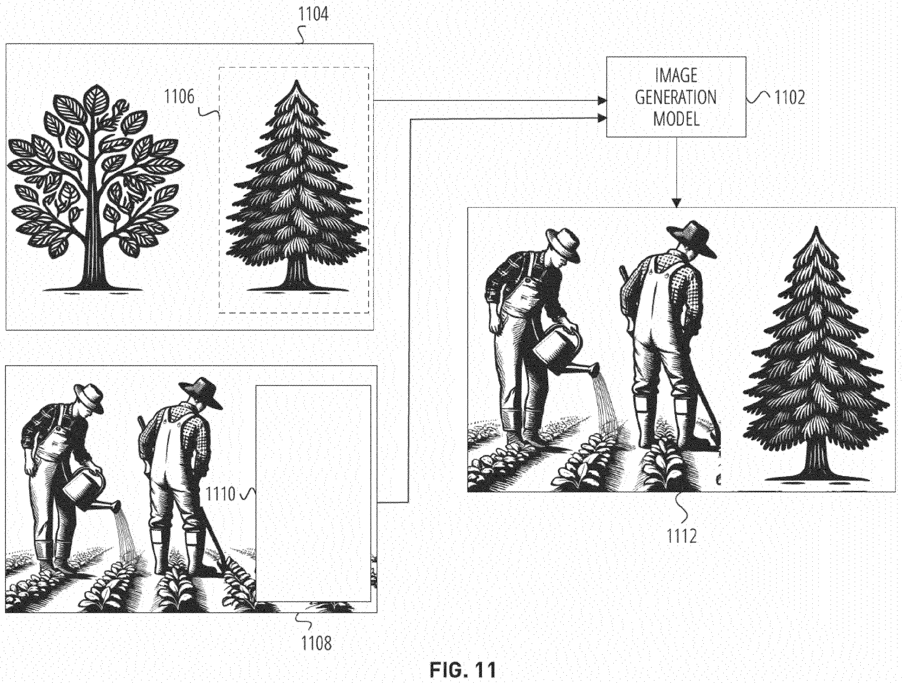

FIG. 11 is an example visual representation of generating a synthetic image, according to various examples. FIG. 11 provides a visual example of generating synthetic images based on option 1006. For example, FIG. 11 includes image file 1108, which may be the base image file (e.g., uploaded using base file selection element 1012) with masked area 1110. The image file 1104 may be uploaded as a secondary image file (e.g., uploaded using) secondary file selection element 1014 with a bounding box 1106.

In various examples, generating a synthetic image with option 1006 includes generating an object-specific representation (e.g., as described for object-specific representation generation 602) based on a selected subset of the base image file. Then, the object-specific representation and the base image file may be input to image generation model 1102 (e.g., image generation logic 138) with the object-specific representation inputted as a conditional prompt to the image generation model. The image generation model 1102 result image generation model 1102 may be an image with an image based on the generated object-specific representation in the masked area. For example, in FIG. 11, the synthetic image 1112 includes the tree from image file 1104 but the people from image file 1108. Multiple synthetic images may be generated by uploading multiple secondary image files. Thus, training images that include a base part of an image may be quickly generated but with a diverse set of other objects.

In various examples, an image generation model may combine different types of image representations to generate synthetic images. For example, if option 1008 is used, object-specific and attention-based representations may be combined (e.g., averaged) and submitted as conditional prompts to the image generation model.

In various examples, the generated synthetic images may themselves be used to find images in an image data set (e.g., past image dataset 118). For example, consider that an image of a person in a particular terrain (such as an orchard or black soil field) is not readily available. In such an instance, a synthetic image may be generated with a person from one image and a terrain of another (e.g., using option 1008). Then, the synthetic image may be used as a part of a query (e.g., user query 804 or user query 816) to find similar images.

Option 1010 may be used with an entire image or just a part of an image (e.g., selected using a bounding box or other selection method). When this option is used, the image may be passed directly to the image generation model as the prompt. As the image generation model was trained using non-blurry images, the output may be a synthetic image that matches the input image, but that is not blurry. In other cases, attention-based or image-based image representations may be used corresponding to the blurred portion of the image as conditional prompts. For example, an object-specific representation of a selected blurred portion of the base image file may be generated. The generated object-specific representation may be used as an input query, as discussed in FIG. 8, to find similar object-specific representations, which may be used as the conditional prompts.

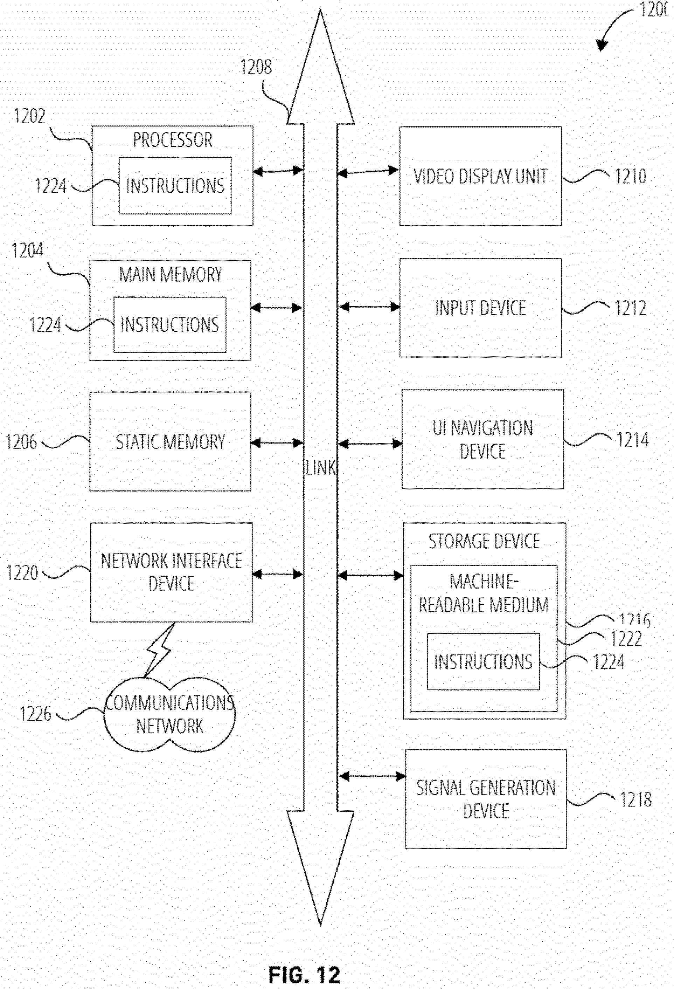

FIG. 12 is a block diagram illustrating a machine in the example form of computer system 1200, within which a set or sequence of instructions may be executed to cause the machine to perform any one of the methodologies discussed herein, according to an example embodiment. In alternative embodiments, the machine operates as a standalone device or may be connected (e.g., networked) to other machines. In a networked deployment, the machine may operate in the capacity of either a server or a client machine in server-client Network environments, or it may act as a peer machine in peer-to-peer (or distributed) Network environments. The machine may be an onboard vehicle system, wearable device, personal computer (PC), a tablet PC, a hybrid tablet, a personal digital assistant (PDA), a mobile telephone, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein. Similarly, the term "processor-based system" shall be taken to include any set of one or more machines that are controlled by or operated by a processor (e.g., a computer) to individually or jointly execute instructions to perform any one or more of the methodologies discussed herein.

Example computer system 1200 includes at least one processor 1202 (e.g., a central processing unit (CPU), a graphics processing unit (GPU) or both, processor cores, compute nodes, etc.), a main memory 1204 and a static memory 1206, which communicate with each other via a link 1208. The computer system 1200 may further include a video display unit 1210, an input device 1212 (e.g., a keyboard), and a user interface UI navigation device 1214 (e.g., a mouse). In one embodiment, the video display unit 1210, input device 1212, and UI navigation device 1214 are incorporated into a single device housing such as a touch screen display. The computer system 1200 may additionally include a storage device 1216 (e.g., a drive unit), a signal generation device 1218 (e.g., a speaker), a network interface device 1220, and one or more sensors (not shown), such as a global positioning system (GPS) sensor, compass, accelerometer, or other sensors.

The storage device 1216 includes a machine-readable medium 1222 on which is stored one or more sets of data structures and instructions 1224 (e.g., software) embodying or utilized by any one or more of the methodologies or functions described herein. The instructions 1224 may also reside, completely or at least partially, within the main memory 1204, static memory 1206, and/or within the processor 1202 during execution thereof by the computer system 1200, with the main memory 1204, static memory 1206, and the processor 1202 also constituting machine-readable media.

While the machine-readable medium 1222 is illustrated in an example embodiment to be a single medium, the term "machine-readable medium" may include a single medium or multiple media (e.g., a centralized or distributed Database, and/or associated caches and servers) that store the one or more instructions 1224. The term "machine-readable medium" shall also be taken to include any tangible medium that is capable of storing, encoding or carrying instructions for execution by the machine and that cause the machine to perform any one or more of the methodologies of the present disclosure or that is capable of storing, encoding or carrying data structures utilized by or associated with such instructions. The term "machine-readable medium" shall accordingly be taken to include, but not be limited to, solid-state memories, and optical and magnetic media. Specific examples of machine-readable media include non-volatile memory, including but not limited to, by way of example, semiconductor memory devices (e.g., electrically programmable read-only memory (EPROM), electrically erasable programmable read-only memory (EEPROM)) and flash memory devices; magnetic disks such as internal hard disks and removable disks; magneto-optical disks; and CD-ROM and DVD-ROM disks. A computer-readable storage device may be a machine-readable medium 522 that excluded transitory signals.

The instructions 1224 may further be transmitted or received over a communications network 1226 using a transmission medium via the network interface device 1220 utilizing any one of a number of well-known transfer protocols (e.g., HTTP). Examples of communication networks include a local area Network (LAN), a wide area Network (WAN), the Internet, mobile telephone networks, plain old telephone (POTS) networks, and wireless data networks (e.g., Wi-Fi, 3G, and 4G LTE/LTE-A or WiMAX networks). The term "transmission medium" shall be taken to include any intangible medium that is capable of storing, encoding, or carrying instructions for execution by the machine, and includes digital or analog communications signals or other intangible medium to facilitate communication of such software.

Example 1 is a computer-implemented method comprising: presenting a user interface, the user interface including a set of image similarity search options; receiving a selected image similarity search option of the set of the image similarity search options, the selected image similarity search option associated with a type of image representation; accessing an input query image file; generating an image representation of the input query image file according to the selected image similarity search option using a transformer model; querying an image representations database for image representations of a type that matches the type of image representation associated with the selected image similarity search option; filtering image representations resulting from the querying to a result set of image representations; and outputting a set of image files associated with the result set of image representations.

In Example 2, the subject matter of Example 1 optionally includes generating a set of feature vectors based on the set of image files; and training an object detection model based on the set of feature vectors.

In Example 3, the subject matter of any one or more of Examples 1-2 optionally include wherein filtering image representations resulting from the querying to the result set of image representations includes: calculating a cosine similarity value between the image representation of the input query image file and the image representations of the querying; and filtering image representations that are below a threshold cosine similarity value.

In Example 4, the subject matter of any one or more of Examples 1-3 optionally include wherein the set of image similarity search options includes a class-based image similarity option, an attention-based image similarity option, and an object-specific image similarity option.

In Example 5, the subject matter of Example 4 optionally includes receiving the attention-based image similarity option from the set of image similarity search options; and wherein generating an image representation of the input query image file according to the selected image similarity search option using the transformer model includes: segmenting the input query image file into patch representations; inputting the patch representations into the transformer; receiving an output set of patch representations from the transformer, the output set of patch representations including attention values for each of the patch representations; filtering out patch representations from the output set of patch representations that have an attention value below a threshold; and aggregating patch representations remaining after the filtering as the image representation.

In Example 6, the subject matter of Example 5 optionally includes wherein the type of image representation is an attention-based representation.

In Example 7, the subject matter of any one or more of Examples 4-6 optionally include wherein the input query image file includes an identification of a subset of the input query image file and wherein the type of image representation is an object-specific representation.

In Example 8, the subject matter of Example 7 optionally includes receiving the object-specific image similarity option from the set of image similarity search options; and wherein generating an image representation of the input query image file according to the selected image similarity search option using the transformer model includes: inputting the input query image file into the transformer; receiving an output set of patch representations from the transformer; aggregating a subset of output patch representations of the patch representations as the image representation, the subset of the output patch representations based on the identification of the subset of the input query image file.

In Example 9, the subject matter of Example 8 optionally includes determining a number of instances of a class of objects in the input query image file; and excluding image representations from image representations database that do not have at least the number of instances of the class of objects.

In Example 10, the subject matter of any one or more of Examples 7-9 optionally include wherein the identification of the subset of the input query image file is represented as coordinates.

Example 11 is a computer-implemented method comprising: accessing a set of image files; and for each image file in the set of image files: inputting the image file into a transformer model; segmenting the image file into patches using the transformer model; generating, using the transformer model and the patches, a set of patch representations and a class token representation of the image file; generating, using the transformer model and the patch representations, an attention-based representation of the image file; generating, using the transformer model and the patch representations, an object-specific representation of the image file; and storing the class token representation, attention-based representation, and object-specific representation as associated with image file.

In Example 12, the subject matter of Example 11 optionally includes wherein generating the attention-based representation of the image file includes: receiving an output set of patch representations from the transformer model, the output set of patch representations including attention values for each of the patch representations; filtering patch representations from the output set of patch representations that have an attention value below a threshold; and aggregating patch representations remaining after the filtering as the attention-based representation of the image file.

In Example 13, the subject matter of any one or more of Examples 11-12 optionally include wherein generating, using the transformer model and the patch representations, the object-specific representation of the image file includes: inputting the patch representations into the transformer model; based on the inputting, receiving an output set of patch representations from the transformer model, wherein each patch representation of the output set includes encoded positional information identifying a location of patch representation within the image; retrieving coordinates of a subset of the image; identifying a subset of patch representations based on patch representations of the output set that are within the coordinates of the subset of the image based on the encoded positional information; and aggregating the subset of patch representations as the object-specific representation of the image file.

In Example 14, the subject matter of Example 13 optionally includes wherein retrieving the coordinates of the subset of the image includes parsing metadata of the image file, the metadata identifying a bounding box area of the image file.

In Example 15, the subject matter of Example 14 optionally includes retrieving a label for the bounding box area from the metadata; and associating the object-specific representation with the label.

In Example 16, the subject matter of any one or more of Examples 14-15 optionally include retrieving coordinates of a second subset of the image from the metadata of the image file; identifying a second subset of patch representations based on patch representations of the output set that are within the coordinates of the second subset of the image based on the encoded positional information; and aggregating the second subset of patch representations a second object-specific representation of the image file.

Example 17 is a computer-implemented method comprising: presenting an image generation user interface including: an image input element configured to select a base image file; and a set of selectable synthetic image generation options; receiving a selection of a synthetic image generation option of the set of selectable synthetic image generation options; based on the synthetic image generation option, querying an image representation database; receiving a set of image representations from a result of the querying; generating, using an image generation model, a synthetic image using the set of image representations and the base image file as inputs to the image generation model, the set of image representations inputted as a conditional prompt to the image generation model.

In Example 18, the subject matter of Example 17 optionally includes receiving an identification of a subset of the base image file and wherein the set of image representations includes an object-specific representation.

In Example 19, the subject matter of Example 18 optionally includes wherein generating, using the image generation model, the synthetic image includes: generating image data in the subset of the base image file based on the object-specific representation.

In Example 20, the subject matter of Example 19 optionally includes wherein the selection of the synthetic image generation option is a same class of object generation option and wherein a class of object of the object-specific representation is a same class of object as the subset of the base image file.

In Example 21, the subject matter of any one or more of Examples 19-20 optionally include wherein the selection of the synthetic image generation option is a difference class of object generation option and wherein a class of object of the object-specific representation is a different class of object as the subset of the base image file.

In Example 22, the subject matter of any one or more of Examples 18-21 optionally include wherein the subset of the base image file is a masked area.

In Example 23, the subject matter of any one or more of Examples 17-22 optionally include wherein the image generation user interface includes an input element to select a secondary image file.

In Example 24, the subject matter of Example 23 optionally includes generating an object-specific representation based on a selected subset of the secondary image file generating, using the image generation model, a second synthetic image using the base image file and object-specific representation as inputs to the image generation model, the object-specific representation inputted as a conditional prompt to the image generation model.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

The above detailed description includes references to the accompanying drawings, which form a part of the detailed description. The drawings show, by way of illustration, specific embodiments that may be practiced. These embodiments are also referred to herein as "examples." Such examples may include elements in addition to those shown or described. However, also contemplated are examples that include the elements shown or described. Moreover, also contemplate are examples using any combination or permutation of those elements shown or described (or one or more aspects thereof), either with respect to a particular example (or one or more aspects thereof), or with respect to other examples (or one or more aspects thereof) shown or described herein.

**Claims**

1. A computer-implemented method comprising:

    presenting a user interface, the user interface including a set of image similarity search options;
    receiving a selected image similarity search option of the set of the image similarity search options, the selected image similarity search option associated with a type of image representation;
    accessing an input query image file;

generating an image representation of the input query image file according to the selected image similarity search option using a transformer model;

querying an image representations database for image representations of a type that matches the type of image representation associated with the selected image similarity search option;

filtering image representations resulting from the querying to a result set of image representations; and

outputting a set of image files associated with the result set of image representations.

2. The computer-implemented method of claim 1, further comprising:

generating a set of feature vectors based on the set of image files; and

training an object detection model based on the set of feature vectors, and/ or wherein filtering image representations resulting from the querying to the result set of image representations includes:

calculating a cosine similarity value between the image representation of the input query image file and the image representations of the querying; and

filtering image representations that are below a threshold cosine similarity value.

3. The computer-implemented method of any one of claims 1 to 2, wherein the set of image similarity search options includes a class-based image similarity option, an attention-based image similarity option, and an object-specific image similarity option.

4. The computer-implemented method of claim 3, further comprising:

receiving the attention-based image similarity option from the set of image similarity search options; and

wherein generating an image representation of the input query image file according to the selected image similarity search option using the transformer model includes:

segmenting the input query image file into patch representations;

inputting the patch representations into the transformer;

receiving an output set of patch representations from the transformer, the output set of patch representations including attention values for each of the patch representations;

filtering out patch representations from the output set of patch representations that have an attention value below a threshold; and

aggregating patch representations remaining after the filtering as the image representation.

5. The computer-implemented method of claim 4, wherein the type of image representation is an attention-based representation.

6. The computer-implemented method of any one of claims 3 to 5, wherein the input query image file includes an identification of a subset of the input query image file and wherein the type of image representation is an object-specific representation.

7. The computer-implemented method of claim 6, further comprising:

receiving the object-specific image similarity option from the set of image similarity search options; and

wherein generating an image representation of the input query image file according to the selected image similarity search option using the transformer model includes:

inputting the input query image file into the transformer;

receiving an output set of patch representations from the transformer; and

aggregating a subset of output patch representations of the patch representations as the image representation, the subset of the output patch representations based on the identification of the subset of the input query image file.

8. The computer-implemented method of claim 7, further comprising:

determining a number of instances of a class of objects in the input query image file; and

excluding image representations from image representations database that do not have at least the number of instances of the class of objects.

9. The computer-implemented method of any one of claims 6 to 8, wherein the identification of the subset of the input query image file is represented as coordinates.

10. A non-transitory computer-readable medium comprising instructions, which when executed by a processing unit, configure the processing unit to perform operations comprising:

> presenting a user interface, the user interface including a set of image similarity search options;
> receiving a selected image similarity search option of the set of the image similarity search options, the selected image similarity search option associated with a type of image representation;
> accessing an input query image file;
> generating an image representation of the input query image file according to the selected image similarity search option using a transformer model;
> querying an image representations database for image representations of a type that matches the type of image representation associated with the selected image similarity search option;
> filtering image representations resulting from the querying to a result set of image representations; and
> outputting a set of image files associated with the result set of image representations.

11. The non-transitory computer-readable medium of claim 10, wherein the instructions, which when executed by the processing unit, further configure the processing unit to perform operations comprising:

> generating a set of feature vectors based on the set of image files; and
> training an object detection model based on the set of feature vectors, and/or
> wherein filtering image representations resulting from the querying to the result set of image representations includes:

>> calculating a cosine similarity value between the image representation of the input query image file and the image representations of the querying; and
>> filtering image representations that are below a threshold cosine similarity value.

12. The non-transitory computer-readable medium of any one of claims 10 to 11, wherein the set of image similarity search options includes a class-based image similarity option, an attention-based image similarity option, and an object-specific image similarity option.

13. The non-transitory computer-readable medium of claim 12, wherein the instructions, which when executed by the processing unit, further configure the processing unit to perform operations comprising:

> receiving the attention-based image similarity option from the set of image similarity search options; and
> wherein generating an image representation of the input query image file according to the selected image similarity search option using the transformer model includes:

>> segmenting the input query image file into patch representations;
>> inputting the patch representations into the transformer;
>> receiving an output set of patch representations from the transformer, the output set of patch representations including attention values for each of the patch representations;
>> filtering out patch representations from the output set of patch representations that have an attention value below a threshold; and
>> aggregating patch representations remaining after the filtering as the image representation.

14. The non-transitory computer-readable medium of claim 13, wherein the type of image representation is an attention-based representation.

15. The non-transitory computer-readable medium of any one of claims 12 to 14, wherein the input query image file includes an identification of a subset of the input query image file and wherein the type of image representation is an object-specific representation.

16. The non-transitory computer-readable medium of claim 15, wherein the instructions, which when executed by the processing unit, further configure the processing unit to perform operations comprising:

receiving the object-specific image similarity option from the set of image similarity search options; and wherein generating an image representation of the input query image file according to the selected image similarity search option using the transformer model includes:

inputting the input query image file into the transformer;

receiving an output set of patch representations from the transformer;

aggregating a subset of output patch representations of the patch representations as the image representation, the subset of the output patch representations based on the identification of the subset of the input query image file and wherein optionally

the instructions, which when executed by the processing unit, further configure the processing unit to perform operations comprising:

determining a number of instances of a class of objects in the input query image file; and excluding image representations from image representations database that do not

have at least the number of instances of the class of objects.

17. A system comprising:

a processing unit; and

a storage device comprising instructions, which when executed by the processing unit, configure the processing unit to perform operations comprising:

presenting a user interface, the user interface including a set of image similarity search options;

receiving a selected image similarity search option of the set of the image similarity search options, the selected image similarity search option associated with a type of image representation;

accessing an input query image file;

generating an image representation of the input query image file according to the selected image similarity search option using a transformer model;

querying an image representations database for image representations of a type that matches the type of image representation associated with the selected image similarity search option;

filtering image representations resulting from the querying to a result set of image representations; and

outputting a set of image files associated with the result set of image representations.

FIG. 1

200

IMAGE REPRESENTATION GENERATION

206

CLASS TOKEN REPRESENTATION GENERATION
210

ATTENTION-BASED REPRESENTATION GENERATION
212

TRANSFORMER
208

OBJECT-SPECIFIC REPRESENTATION GENERATION
214

CLASS TOKEN REPRESENTATIONS

ATTENTION-BASED PATCH REPRESENTATIONS

OBJECT REPRESENTATIONS

IMAGE REPRESENTATIONS DATABASE
216

IMAGE
204

DATABASE OF IMAGES
202

**FIG. 2**

FIG. 3

**FIG. 4**

FIG. 5

**FIG. 6**

FIG. 7

**FIG. 8**

902 — PRESENT AN IMAGE GENERATION USER INTERFACE INCLUDING AN IMAGE INPUT ELEMENT CONFIGURED TO SELECT A BASE IMAGE FILE AND A SET OF SELECTABLE SYNTHETIC IMAGE GENERATION OPTIONS

904 — RECEIVE A SELECTION OF A SYNTHETIC IMAGE GENERATION OPTION OF THE SET OF SELECTABLE SYNTHETIC IMAGE GENERATION OPTIONS

906 — BASED ON THE SYNTHETIC IMAGE GENERATION OPTION, QUERY AN IMAGE REPRESENTATION DATABASE

908 — RECEIVE A SET OF IMAGE REPRESENTATIONS FROM A RESULT OF THE QUERYING

910 — GENERATE USING AN IMAGE GENERATION MODEL, A SYNTHETIC IMAGE USING THE SET OF IMAGE REPRESENTATIONS AND THE BASE IMAGE FILE AS INPUTS TO THE IMAGE GENERATION MODEL, THE SET OF IMAGE REPRESENTATIONS INPUTTED AS A CONDITIONAL PROMPT TO THE IMAGE GENERATION MODEL

**FIG. 9**

FIG. 10

FIG. 11

**FIG. 12**

Europäisches
Patentamt

European
Patent Office

Office européen
des brevets

# EUROPEAN SEARCH REPORT

**Application Number**

EP 25 17 8087

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 947 590 B1 (CHAKRABORTY RIA [IN] ET AL) 2 April 2024 (2024-04-02) * column 1 - column 9; figure 4 * ----- | 1-17 | INV. G06F16/535 G06F16/583 |

TECHNICAL FIELDS SEARCHED (IPC)

G06F

The present search report has been drawn up for all claims

| Place of search | Date of completion of the search | Examiner |
|---|---|---|
| The Hague | 3 September 2025 | Rameseder, Jonathan |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

.............................................................................

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 17 8087

This annex lists the patent family members relating to the patent documents cited in the above-mentioned European search report.
The members are as contained in the European Patent Office EDP file on
The European Patent Office is in no way liable for these particulars which are merely given for the purpose of information.

03-09-2025

| Patent document cited in search report | Publication date | Patent family member(s) | Publication date |
|---|---|---|---|
| US 11947590 B1 | 02-04-2024 | NONE | |

EPO FORM P0459

For more details about this annex : see Official Journal of the European Patent Office, No. 12/82